# EUROPÄISCHE PATENTANMELDUNG

(11) **EP 0 947 827 A1**
(43) Veröffentlichungstag der Anmeldung: **06.10.1999**
(21) Anmeldenummer: 98106095.7
(22) Anmeldetag: 03.04.1998
(51) Int. Cl.: G01N 21/88, F21V 7/00

(54) **Vorrichtung zur visuellen Inspektion von in verschiedenen Ebenen liegenden Oberflächen von Körpern**

(71) Anmelder: VH Lichttechnische Spezialgeräte GmbH, 53604 Bad Honnef-Rhöndorf (DE)
(72) Erfinder:
(74) Vertreter: Stenger, Watzke & Ring Patentanwälte

(57) **Zusammenfassung**

Um eine Vorrichtung zur visuellen Inspektion von in verschiedenen Ebenen liegenden Oberflächen von Körpern (1), insbesondere bei der Qualitätskontrolle oberflächenbehandelter Bauteile, unter Verwendung wenigstens einer Lichtquelle (4) und einem das von der Lichtquelle (4) emittierte Licht auf ein flächiges Reflexionselement (3, 3a, 9, 10) leitenden Umlenkreflektor (6), wobei das Licht durch das flächige Reflexionselement (3, 3a, 9, 10) definiert auf die Oberfläche eines zu inspizierenden Körpers (1) reflektierbar ist, zu schaffen, die auf wirtschaftliche und ergonomische Weise eine Fehlererkennung auf der gesamten dreidimensionalen Oberfläche des zu inspizierenden Bauteils (1) ermöglicht, wird vorgeschlagen, daß der zu inspizierende Körper (1) an einem Inspektionsort auf einer Inspektionsebene positionierbar ist, die im wesentlichen parallel zu einer Beobachtungsebene (B) eines die visuelle Inspektion vornehmenden Beobachters (11) angeordnet ist, und daß das Licht von wenigstens zwei flächigen Reflexionselementen (3, 3a, 9, 10) unter vorgegebenen Einfallwinkeln auf die Oberfläche zumindestens einer Seite des zu inspizierenden Körpers (1) zur Bildung einer Reflexionskontur reflektierbar ist, wobei der von den flächigen Reflexionselementen (3, 3a, 9, 10) reflektierte Strahlengang ausschließlich indirektes, gerichtetes Licht enthält, und wobei wenigstens eines der flächigen Reflexionselemente (3, 3a) oberhalb und wenigstens ein weiteres (9, 10) unterhalb der Beobachtungsebene (B) angeordnet und der jeweilige Strahlengang unter einem vorgegebenen Winkel zur Beobachtungsebene (B) auf den zu inspizierenden Körper (1) gerichtet ist.

## Beschreibung

Die Erfindung betrifft eine Vorrichtung zur visuellen Inspektion von in verschiedenen Ebenen liegenden Oberflächen von Körpern, insbesondere bei der Qualitätskontrolle oberflächenbehandelter Bauteile, unter Verwendung wenigstens einer Lichtquelle und einem das von der Lichtquelle emittierte Licht auf ein flächiges Reflexionselement leitenden Umlenkreflektor, wobei das Licht durch das flächige Reflexionselement definiert auf die Oberfläche eines zu inspizierenden Körpers reflektierbar ist.

Qualitätssichernde Maßnahmen finden bei industriellen Produktionsprozessen eine zunehmende Bedeutung. Insbesondere zur Erkennung von Oberflächenfehlern, wie beispielsweise Kratzern, Lackfehlern, Beulen oder dergleichen, wird eine visuelle Qualitätskontrolle durchgeführt, die eine Anpassung der Beleuchtung der überwachten Bereiche an die physiologisch-optischen und arbeitspsychologischen Gesetzmäßigkeiten des menschlichen Sehens erfordert.

Ein besonderer Anwendungsfall der industriellen Qualitätskontrolle, auf den die vorliegende Erfindung insbesondere ebenfalls anwendbar ist, ist die Oberflächenkontrolle von Pkw's im Produktionsprozeß. Insbesondere kann die möglichst kontinuierliche Inspektion von Rohkarosserien und im Lackierprozeß von fertig lackierten Karosserien die Fehlerfindung sowie die Nacharbeit verbessern und damit die Ausschußrate erheblich reduzieren und somit zur wirtschaftlichen Produktion immens beitragen.

Man ist bisher davon ausgegangen, daß eine zu guten Ergebnissen führende Oberflächeninspektion grundsätzlich einer besonders guten Beleuchtung bedarf. Man hat daher aus dem Stand der Technik bekannte Anlagen gebaut, bei denen dreidimensionale Körper, insbesondere Fahrzeugkarosserien, in extrem gut ausgeleuchtete Bereiche geführt wurden. Dabei wurden praktisch in einer quer zur Vorschubrichtung des zu beurteilenden Produktes liegenden Ebene Leuchtquellen angeordnet, insbesondere Leuchtstoffröhren, wobei auch bekannt ist, daß diese in vertikaler Anordnung mehrfach nebeneinanderliegend angeordnet sind. Die Leuchtröhren werden in vertikaler Anordnung von einer Seite beginnend kranzartig bis zur anderen Seite das Produkt bogenförmig überspannend angeordnet. Darüber hinaus werden in bodenseitigen Lichtschächten, lichtdurchlässig abgedeckt, ebenfalls Leuchtquellen angeordnet. Dadurch werden sämtliche seitlichen und oberen Oberflächen des durch den Lichtkranz geführten Produktes intensiv und direkt angestrahlt. Derartige Prüfanlagen haben erhebliche Nachteile. Ein wesentlicher Nachteil ist die unzureichende Effektivität, denn die Praxis hat gezeigt, daß die extreme direkte Ausleuchtung Oberflächenfehler nicht in ausreichendem Maße erkennbar macht. Ein weiterer Nachteil besteht in der unzulänglichen Ergonomie der Anlage. Zwangsläufig wird ein Betrachter des extrem ausgeleuchteten Produktes von oben und - in Abhängigkeit von der Größe des Produktes - auch von vorne direkte Lichteinstrahlungen ins Auge haben. Diese direkten Lichtanteile machen den Prüfer praktisch blind für die zu prüfende Oberfläche, indem sie den Sehapparat behindern. Auch hat die Anlage selbst erhebliche Nachteile, denn beispielsweise werden die Lichtschachtabdeckungen durch Begehung mit der Zeit zerkratzt und undurchlässig, müssen also ausgewechselt werden. Die Direktbeleuchtung erzeugt Licht in Größenordnungen von 2500 bis 4500 Lux, zu deren Erzeugung mehrere tausend Watt erforderlich werden. Dadurch werden entsprechende Anlagen auch im Betrieb sehr unwirtschaftlich. Wesentlichster Nachteil ist jedoch das eingangs beschriebene Kontrastsehen, also der gleichzeitige Einfall von von der Oberfläche des zu prüfenden Produktes reflektierten Lichtanteilen und von den Leuchtmitteln stammenden, direkten Lichtanteilen in das Auge. Auch hat sich in der Praxis erwiesen, daß durch die beschriebenen Verfahren und Anlagen das 3D-Sehen erheblich beeinträchtigt wird. Insbesondere ist es äußerst schwierig, die Ausrichtung von Stößen von Flächen, beispielsweise das sogenannte Spaltmaß aneinandergrenzender Flächen, mit ausreichender Sicherheit zu prüfen.

Aus der EP 0 658 721 B1 ist eine als Baugruppe ausgebildete Beleuchtungsvorrichtung bekannt, bei der das Licht einer Lichtquelle mittels Umlenkreflektoren auf eine Reflexionsfläche umgelenkt wird, die so eingestellt ist, daß das Licht in einer definierten Weise auf die zu prüfende Oberfläche eines Bauteils auftrifft. Unter dem definierten Anstrahlen eines zu inspizierenden Bauteils im voranstehenden Sinne wird das Beleuchten mit einem ausschließlich indirekten, gerichteten Licht, das unter einem vorgegebenen Einfallwinkel die Oberfläche eines zu prüfenden Bauteils erreicht, verstanden.

Nachteilig bei der bekannten Beleuchtungsvorrichtung ist, daß die Fehlererkennung auf einflächige Bauteile, wie zum Beispiel verzinkte oder lackierte Bleche beschränkt ist. Um die Inspektion auch kompliziert ausgebildeter Oberflächen, zum Beispiel Fahrzeugtüren, zu ermöglichen, ist bereits eine Verbesserung einer derartigen Reflexionsvorrichtung vorgeschlagen worden, die aus einem flächigen Reflexionselement zur Reflexion auftreffender, von wenigstens einer Lichtquelle ausgesandter Lichtstrahlen besteht, und die wenigstens ein weiteres Reflexionselement aufweist, das unabhängig von dem flächigen Reflexionselement einstellbar ist und mit einem gegenüber diesem unabhängig wirksamen Reflexionsbereich angeordnet ist. Auf diese Weise lassen sich wenigstens zwei verschiedene Lichtumlenkungen gezielt durchführen, die im Betrachtungs- und Überprüfungsbereich gezielte Durchmischungen unterschiedlich umgelenkter Lichtstrahlen hervorrufen, die auch schwierige Fehler, das heißt bei bestimmten Produktionsgeschwindigkeiten mit herkömmlichen Mitteln nicht mehr erkennbare Fehler, für das menschliche Auge sichtbar machen.

Derartige vorbekannte Reflexionsvorrichtungen zur Erzeugung einer ausschließlich indirekten Lichtschicht auf der zu prüfenden Oberfläche nutzen auch den Effekt einer bestimmten vorsätzlich erzeugten Reflexionskontur. Das von einer Leuchtquelle über einen Reflektor abgestrahlte Licht wird auf eine flächig ausgebildete Reflexionsfläche geleitet, die ihrerseits gerastert ist. Beispielsweise kann dies durch die parallele Anordnung reflektierender Lamellen oder strukturierten Linien/Mustern erfolgen. Das von der Reflexionsfläche auf die zu prüfende Oberfläche geführte Licht ist praktisch gerichtet und auf der zu prüfenden Oberfläche erscheint eine durch die Segmentierung der Reflexionsfläche erzeugte Reflexionskontur. Bei Verwendung paralleler Lamellen ergeben sich Leuchtstreifen, also auf der Oberfläche parallel verlaufende Streifen unterschiedlicher Lichtstärke. Oberflächenfehler erwirken eine Abweichung von der Parallelität, sind somit leicht zu erkennen.

Das von den vorbekannten Reflexionsvorrichtungen erzeugte indirekte Licht ist kein diffuses Licht im Sinne eines mehrfach reflektierten, gestreuten Lichtes, sondern durch die Art der Reflexionsfläche ergibt sich ein zwar nicht im Sinne der physikalischen Polarisierung ausgerichtetes, aber doch gezielt gerichtetes, paralleles Licht.

Die vorbekannten Reflexionsvorrichtungen eignen sich gut zur Inspektion von Oberflächen, auch von im wesentlichen in einer Ebene liegenden Oberflächen von Körpern, sind jedoch nicht für eine kontinuierliche und weitestgehend gleichzeitige Inspektion der in verschiedenen Ebenen liegenden Oberflächen eines dreidimensionalen Körpers geeignet.

Der Erfindung liegt die **Aufgabe** zugrunde, eine Vorrichtung zur visuellen Inspektion von dreidimensionale Oberflächen aufweisenden Körpern zu schaffen, die bei Vermeidung der zuvor beschriebenen Nachteile auf wirtschaftliche und ergonomische Weise eine Fehlererkennung auf der gesamten dreidimensionalen Oberfläche eines zu inspizierenden Bauteils ermöglicht.

Diese Aufgabe ist bei einer Vorrichtung der eingangs genannten Art erfindungsgemäß dadurch **gelöst,** daß der zu inspizierende Körper an einem Inspektionsort auf einer Inspektionsebene positionierbar ist, die im wesentlichen parallel zu einer Beobachtungsebene eines die visuelle Inspektion vornehmenden Beobachters angeordnet ist, und daß das Licht von wenigstens zwei flächigen Reflexionselementen unter vorgegebenen Einfallwinkeln auf die Oberfläche zumindest einer Seite des zu inspizierenden Körpers zur Bildung einer Reflexionskontur reflektierbar ist, wobei der von den flächigen Reflexionselementen reflektierte Strahlengang ausschließlich indirektes, gerichtetes Licht enthält, und wobei wenigstens eines der flächigen Reflexionselemente oberhalb und wenigstens ein weiteres unterhalb der Beobachtungsebene angeordnet und der jeweilige Strahlengang unter einem Winkel zur Beobachtungsebene auf den zu inspizierenden Körper gerichtet ist.

Eine solchermaßen ausgestaltete Vorrichtung ermöglicht auf wirtschaftliche und ergonomische Weise eine Fehlererkennung auf der gesamten dreidimensionalen Oberfläche eines zu inspizierenden Bauteils. Ursächlich hierfür ist, daß das Licht nicht wie bei herkömmlichen Vorrichtungen nur zur Beleuchtung von Oberflächen herangezogen wird, sondern auch als eine Reflexionskontur erzeugendes Prüfmittel eingesetzt wird, das einerseits eine gut erkennbare Konturierung von Oberflächenfehlern herruft und andererseits eine ergonomische Helligkeitsverteilung im Gesichtsfeld, die das Auge vor Blendung und Überstrahlung verschont, indem keine direkten Lichtanteile in das Auge des Beobachters fallen, sicherstellt. Auf diese Weise läßt sich die Inspektion von Oberflächen eines dreidimensionalen Bauteils auf einfache und schnelle Weise erzielen, ohne daß diese Qualitätskontrolle die Produktionsgeschwindigkeit erheblich beeinträchtigt.

In einer bevorzugten Ausführungsform der Erfindung sind die flächigen Reflexionselemente auf gegenüberliegenden Seiten des zu inspizierenden Körpers angeordnet. Auf diese Weise ist die gleichzeitige Inspizierung beider Seiten, beispielsweise einer Pkw-Karosserie, möglich, wobei durch das indirekte, gerichtete Licht, das von den flächigen Reflexionselementen auf den zu inspizierenden Körper reflektiert wird, eine Blendung eines auf der jeweils gegenüberliegenden Seite befindlichen Beobachters ausgeschlossen ist, da das Licht lediglich die zu prüfende Oberfläche erreicht. Im Gegensatz zu herkömmlichen Vorrichtungen, bei denen aufgrund der direkten Lichtanteile derartige Inspektionen nicht ohne Blendwirkung möglich sind und daher nur in den seltensten Fällen vorzufinden sind, können gemäß dem erfindungsgemäßen Vorschlag mehrere Beobachter gleichzeitig einen zu inspizierenden Körper überprüfen, wodurch die Anwendung bei Massenproduktionen gewährleistet ist.

Von besonderem Vorteil ist es, die flächigen Reflexionselemente von dem zu inspizierenden Körper beabstandet neben diesem anzuordnen. Dies bietet den Vorteil, daß keine besonderen Schutzmaßnahmen für die Reflexionselemente vorzusehen sind, so daß sich eine wartungsarme und wirtschaftliche Herstellung erzielen läßt. Bei hinreichendem Abstand der Reflexionselemente von dem zu inspizierenden Körper ist es zudem für den Beobachter möglich, seinen Beobachtungsstandpunkt ohne größeren Aufwand zu verändern. Darüber hinaus können Nacharbeiten an dem zu inspizierenden Körper unmittelbar durchgeführt werden, indem der hierzu erforderliche Raumbedarf vorhanden ist. Die indirekte Reflexion des Lichts trägt wiederum dazu bei, daß weder der eine unmittelbare Nachbearbeitung vornehmende Arbeiter noch der Beobachter auf seinem neuen Beobachtungsplatz der Blendgefahr unterliegt. Die bei letztgenanntem gegebenenfalls auftretende Schattenwirkung kann zum Teil vernachlässigt werden, da - wie eingangs bereits genannt - das Licht nicht zur Beleuchtung der Oberfläche eines zu inspizierenden Körpers dient, sondern als Prüfmittel, das eine Reflexionskontur erzeugt, die im wesentlichen unabhängig von der Beleuchtungsstärke und damit der Schattenwirkung ist.

Zweckmäßigerweise ist der zu inspizierende Körper mittels einer Transporteinrichtung an dem Inspektionsort positionierbar, um auch bei einer Massenproduktion eine hohe Prüfquote zu erreichen. Bei einer Transporteinrichtung, die den zu inspizierenden Körper kontinuierlich fördert, ist zugleich die für das Erkennen von Fehlern notwendige Relativbewegung zwischen betrachtendem Auge und zu inspizierendem Körper sichergestellt. Ist eine Transporteinrichtung vorgesehen, die den zu inspizierenden Körper nicht kontinuierlich fördert, wie beispielsweise bei einem Auditplatz zur besonderen Inspektion eines einzelnen Fahrzeugs, bei dem das Fahrzeug stillsteht, ist daher zumindest eine Augenbewegung des Beobachters erforderlich.

Gemäß einem weiteren Merkmal der Erfindung sind die flächigen Reflexionselemente relativ zu dem Strahlengang des von der Lichtquelle emittierten Lichts verstellbar, um eine Anpassung der Lichtverteilung an die jeweilige Sehaufgabe sicherzustellen. Hierzu ist es weiterhin vorteilhaft, wenn die flächigen Reflexionselemente einzelne Reflexionslamellen aufweisen, die relativ zueinander verstellbar sind.

Zweckmäßigerweise sind horizontal und/oder vertikal verschwenkbare Leuchten vorgesehen, in denen Lichtquelle, Umlenkreflektor sowie Filter/Refraktorgläser integriert sind, um eine einfache Handhabung zu gewährleisten. Zweckmäßig ist es ferner, wenn die Leuchten dimmbar sind, um das Licht an beispielsweise die Farbe und den Glanzgrad der zu inspizierenden Oberfläche oder den Lichtbedarf des Beobachters in Abhängigkeit von Schichtbeginn, Schichtende, Alter sowie biologische Lichterwartung je nach Jahreszeit anzupassen. Das Dimmen der Leuchten trägt ferner zu einer erheblichen Verlängerung der Lebensdauer derselben bei. Als besonders vorteilhaft haben sich vier Dimmstufen von 95 %, 70 %, 50 % sowie 35 % der Nenn-Beleuchtungsstärke herausgestellt. Um eine negative psychologische Beeinflussung infolge des Dunklerwerdens beim Dimmen zu vermeiden, ist es vorteilhaft, die zeitliche Veränderung so einzustellen, daß die Adaptionszeit des Auges kürzer ist als die vollständige Veränderung der Lichtstärke. Da - wie bereits ausgeführt - der erfindungsgemäße Vorschlag im Gegensatz zu herkömmlichen Vorrichtungen mit einem geringeren Beleuchtungsniveau auskommt, läßt sich auf diese Weise der Energieaufwand senken, wodurch sich zudem eine geringe Belastung der Umgebungstemperatur ergibt. Ferner wird infolge der dadurch bedingten längeren Lebensdauer der Lampen eine hohe Umweltverträglichkeit erzielt, da der Aufwand zum Entsorgen der Lampen reduziert wird.

Um eine besonders augenschonende Fehlererkennung mit einem geringen, das Auge irritierenden Rotanteil der emittierten Lichtstrahlung zu erzielen, sind die Leuchten vorteilhafterweise mit Lichtquellen versehen, die eine Lichtfarbe von ca. 5500 K aufweisen und damit ein ergonomisch günstiges Zenitlicht erzeugen. Von besonderem Vorteil ist es ferner, die Leuchten und die Reflexionselemente modulartig zu gruppieren, um eine hohe Flexibilität hinsichtlich individuellen Kundenanforderungen zu erreichen.

Gemäß einer weiteren vorteilhaften Weiterbildung der Erfindung ist hierzu ein erstes Modul vorgesehen, das zentral über dem zu inspizierenden Körper angeordnete, vertikal verschwenkbare Leuchten für oberhalb der Beobachtungsebene befindliche, vertikal verschwenkbare, flächige Reflexionselemente und/oder beidseitig neben dem zu inspizierenden Körper angeordnete, vertikal verschwenkbare Leuchten für sich auf der jeweils gleichen Seite unterhalb der Beobachtungsebene befindende, vertikal verschwenkbare, flächige Reflexionselemente aufweist.

Gemäß einem weiteren Merkmal der Erfindung ist ein zweites Modul vorgesehen, das neben dem zu inspizierenden Körper auf einer Seite desselben eine horizontal verschwenkbare Leuchte für ein auf der gleichen Seite unterhalb der Beobachtungsebene angeordnetes, horizontal verschwenkbares, flächiges Reflexionselement und auf der gegenüberliegenden Seite vertikal verschwenkbare Leuchten für unterhalb der Beobachtungsebene angeordnete, vertikal verschwenkbare, flächige Reflexionselemente aufweist. Durch die horizontal beziehungsweise vertikal verschwenkbaren Leuchten und flächigen Reflexionselemente des ersten und zweiten Moduls ist eine universelle Lichtverteilung entsprechend den jeweiligen Sehaufgaben sichergestellt und damit beispielsweise das Ergebnis guter oder mangelhafter Nacharbeit sofort und unschwer zu erkennen.

Um einen hohen prozentualen Anteil an kontrollierten Bauteilen einer Produktion zu erzielen, wird weiterhin vorgeschlagen, daß mehrere Module des ersten und zweiten Typs hintereinander angeordnet sind, so daß sich eine hohe Prüfquote erzielen läßt, die eine sofortige Nachbearbeitung beanstandeter Bauteile sowie unmittelbare Rückschlüsse auf den vorangegangenen Produktionsprozeß ermöglicht. Schließlich wird vorgeschlagen, daß die Vorrichtung gegenüber extern einfallendem Licht abgeschirmt ist, wozu beispielsweise eine Umhausung oder ein Baldachin verwendet werden kann. Der Ausschluß des Fremdlichts, das heißt systemfremdes Licht, ermöglicht die Inspektion mit einem relativ geringen Energieeinsatz und trägt zudem auch dazu bei, daß das zu inspizierende Bauteil mit einem Licht hoher Gleichmäßigkeit und nahezu ohne Blendwirkung anstrahlbar ist.

Weitere Einzelheiten, Merkmale und Vorteile des Gegenstandes der Erfindung ergeben sich aus der nachfolgenden Beschreibung eines bevorzugten Ausführungsbeispiels, das in den Zeichnungen dargestellt ist, und zwar zeigen:
- Fig. 1: eine schematische Seitenansicht eines mit einer Vorrichtung zur visuellen Inspektion von dreidimensionalen Bauteilen versehenen Arbeitsplatzes;
- Fig. 1a: eine Ansicht gemäß Fig. 1 mit eingezeichnetem Strahlengang des Lichtes;
- Fig. 2: eine schematische Seitenansicht von zwei durch Leuchten anstrahlbare flächige Reflexionselemente;
- Fig. 2a: eine Draufsicht auf ein Traggerüst, an dem die Leuchten und flächigen Reflexionselemente gemäß Fig. 2 angeordnet sind;
- Fig. 3: eine schematische Seitenansicht von mittels Leuchten anstrahlbaren, vertikal beziehungsweise horizontal verschwenkbaren Reflexionselementen und
- Fig. 4: eine schematische Draufsicht auf eine Qualitätskontrollstraße mit modulartig gruppierten Leuchten und Reflexionselementen.

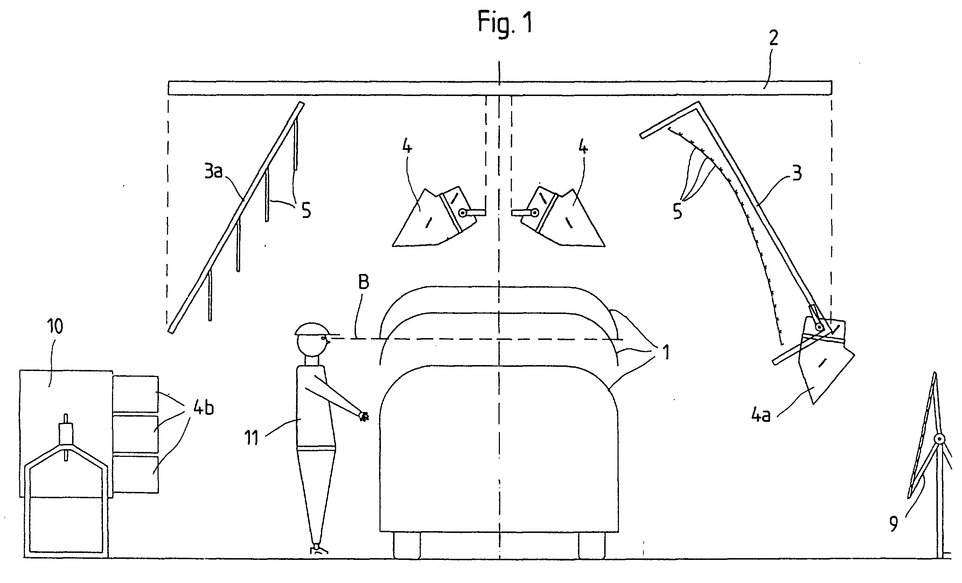

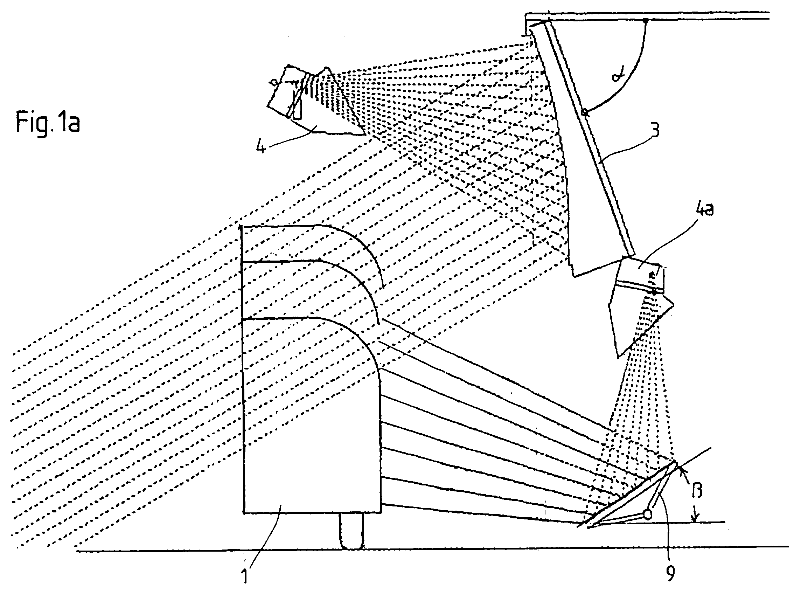

Wie in den Fig. 1 und 1a zu erkennen ist, weist die Vorrichtung zur visuellen Inspektion von Bauteilen 1 ein Traggerüst 2 auf, an dem beidseitig von den Bauteilen 1 flächige Reflexionselemente 3, 3a oberhalb einer Beobachtungsebene B aufgehangen sind. Zentral über den Bauteilen 1 sind Leuchten 4 an dem Traggerüst 2 befestigt, mit welchen die flächigen Reflexionselemente 3, 3a anstrahlbar sind. Wie insbesondere Fig. 1a zu entnehmen ist, sind die flächigen Reflexionselemente 3, 3a um einen Winkel α in vertikaler Richtung verschwenkbar.

Die flächigen Reflexionselemente 3, 3a weisen aus eloxiertem Aluminium bestehende Lamellen 5 auf, die bei der Ausführungsform 3a zusätzlich einzeln verstellbar sind. Die Leuchten 4 sind mit einem Gehäuse aus Aluminium-Druckguß und wahlweise mit Lampen von 150 oder 250 Watt versehen. An den Leuchten 4 sind Umlenkreflektoren 6 angeordnet, die ein indirektes, gerichtetes Licht erzeugen. Je nach Beleuchtungsaufgabe können die Leuchten 4 zusätzlich mit Filtern oder Refraktorgläsern versehen sein, um ein polarisiertes Licht zu erhalten. Mittels eines Dimmers sind die Leuchten 4 in vier Stufen von 95, 70, 50 und 35 % der Nenn-Beleuchtungsstärke dimmbar, um eine Anpassung der Lichtstärke an den jeweiligen Bedarf zu erzielen.

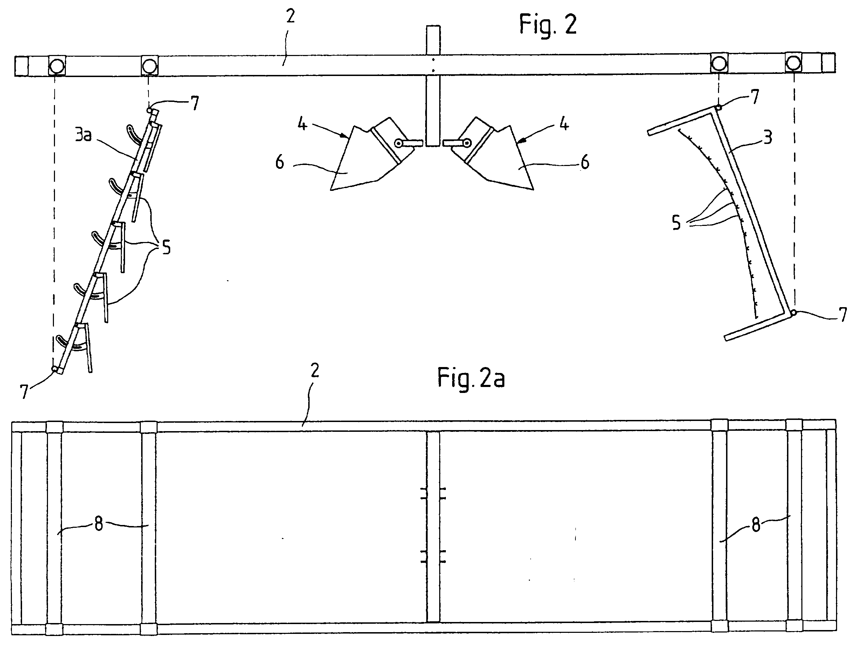

Wie den Fig. 2 und 2a zu entnehmen ist, sind die flächigen Reflexionselemente 3, 3a an ihren jeweiligen Enden mit Ösen 7 versehen, die bei Bedarf eine räumlich variable Aufhängung an entlang des Traggerüsts 2 verschiebbaren Querbalken 8 ermöglichen.

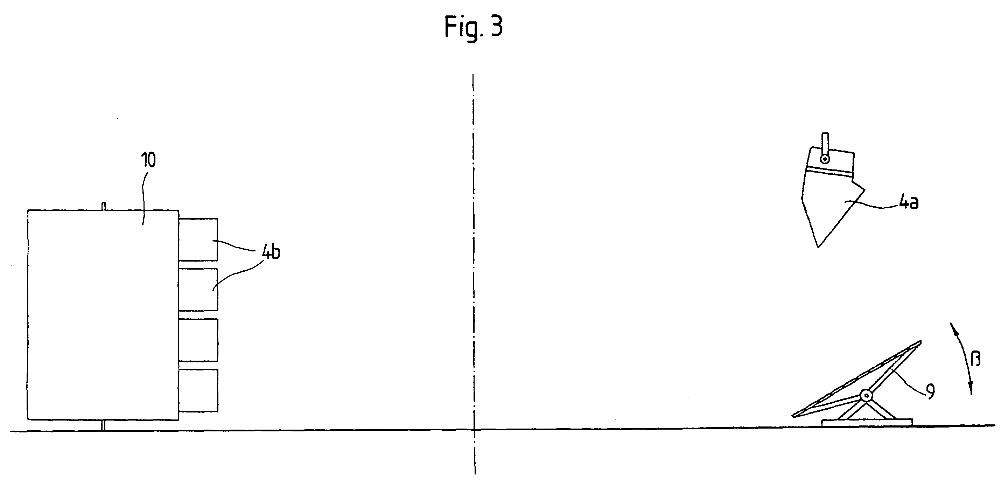

Neben den Bauteilen 1 sind weiterhin vertikal verstellbare Leuchten 4a angeordnet, die baugleich zu den Leuchten 4 sind und mit denen unterhalb der Beobachtungsebene B angeordnete, vertikal um einen Winkel β verschwenkbare Reflexionselemente 9 anstrahlbar sind. Auf der diesen Reflexionselementen 9 gegenüberliegenden Seite der Bauteile 1 sind horizontal verschwenkbare Reflexionselemente 10 angeordnet, die durch Leuchten 4b angestrahlt werden. Je nach Anwendungsfall kann das horizontal verschwenkbare Reflexionselement 10 auch als vertikal verschwenkbares Reflexionselement ausgebildet sein. Eine alternative Ausführungsform hierzu mit vier Leuchten 4b ist Fig. 3 zu entnehmen. In Fig. 3 ist weiterhin erkennbar, daß das unterhalb der Beobachtungsebene B angeordnete Reflexionselement 9 zusätzlich in der Höhe verstellbar ist. Dies trifft auch für das Reflexionselement 10 zu.

Werden die flächigen Reflexionselemente 3, 3a und die Reflexionselemente 9, 10 von den Leuchten 4 bis 4b angestrahlt, so entsteht ein indirektes, gerichtetes Licht mit vorgegebenem Einfallwinkel, das auf die Bauteile 1 auftrifft. Der Strahlengang des Lichts ist in Fig. 1a dargestellt. Ein die visuelle Inspektion der Bauteile 1 vornehmender Beobachter 11 wird durch das gerichtete Licht vor Blendung geschützt. Das von Überstrahlung geschonte Auge ermüdet dadurch langsamer und ermöglicht eine längere Beobachtungszeit für die Fehlererkennung. Es ergeben sich Lichtfelder, mit einer hohen Gleichmäßigkeit, die ein besonders gutes Erkennen von Fehlern in der Oberfläche der Bauteile 1 ermöglichen. Neben der Art der Oberfläche und der Transportgeschwindigkeit der Bauteile 1, mit der diese mittels einer nicht dargestellten Transporteinrichtung, beispielsweise Hängeförderer oder ein Fließband, an dem Beobachter 11 vorbeigeführt werden, kommt es bei der Fehlererkennung entscheidend auf die Veränderung des Blickwinkels des Beobachters 11 bezüglich der unterschiedlich reflektierten Fehlstellen an. Um eine besonders ergonomische Fehlererkennung zu erzielen, ist die Lichtstärke der Leuchten 4 bis 4b an die biologischen Lichterwartung des Beobachters 11, die bekanntlich von dem Alter des Beobachters 11, der Jahreszeit sowie dem Schichtanfang und -ende abhängt, mittels Dimmer anpaßbar. Die vier Dimmstufen der Leuchten 4 bis 4b ermöglichen zudem ein geringeres Beleuchtungsniveau, das die Augen schont und ein langes, ermüdungsfreies Arbeiten sicherstellt. Im Gegensatz zu herkömmlichen Vorrichtungen ist eine Beleuchtungsstärke von 600 Lux bis 800 Lux ausreichend, wozu lediglich wenige 100 W benötigt werden. Die mit Halogenmetalldampflampen versehen Leuchten 4 bis 4b erzeugen eine Lichtfarbe von ca. 5500 K, die demnach dem besonders augenfreundlichen Zenitlicht entspricht und den das Auge irritierenden Rotanteil der emittierten Strahlung weitestgehend ausschließt.

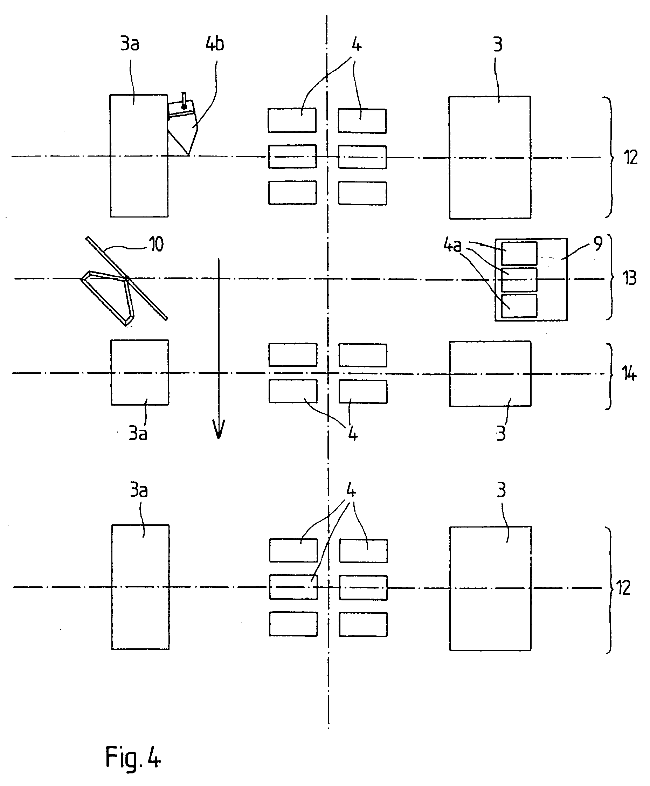

In Fig. 4 sind zu Modulen gruppierte Leuchten 4 bis 4b und flächige Reflexionselemente 3, 3a sowie 9, 10 zu erkennen. Ein erstes Modul 12 weist sechs, zentral über den zu inspizierenden Bauteilen 1 angeordnete, vertikal verschwenkbare Leuchten 4 auf, die beidseitig der Bauteile 1 angeordnete flächige Reflexionselemente 3, 3a anstrahlen. Ein in Transportrichtung der Bauteile 1 gemäß dem eingezeichneten Pfeil folgendes Modul 13 besteht aus einem vertikal verschwenkbaren Reflexionselement 9, das durch Leuchten 4a angestrahlt wird und einem auf der gegenüberliegenden Seite angeordneten horizontal verschwenkbaren Reflexionselement 10, das von einer horizontal verschwenkbaren Leuchte 4b angestrahlt wird. Das sich an das Modul 13 in Transportrichtung anschließende Modul 14 ist ähnlich aufgebaut wie das Modul 12, weist im Unterschied zu diesem aber nur vier Leuchten 4 auf, die entsprechend kleiner dimensionierte flächige Reflexionselemente 3, 3a anstrahlen. An das Modul 14 schließt sich schließlich erneut ein Modul 12 an, so daß eine flexible, beliebig ergänzbare, variable Qualitätskontrollstraße entsteht, die nicht nur Stichproben sondern auch eine kontinuierliche Qualitätskontrolle ermöglicht. Vor allem letzteres gewährleistet unmittelbare Rückschlüsse auf den aktuellen Produktionsprozeß, so daß bei Erkennen auftretender Fehler eine unmittelbare Einflußnahme auf den Produktionsprozeß stattfinden kann.

Mit der zuvor beschriebenen Vorrichtung zur visuellen Inspektion von dreidimensionalen Bauteilen mittels flächigen Reflexionselementen 3, 3a beziehungsweise 9, 10 ist eine optimale Fehlererkennung einer dreidimensionalen Oberfläche gewährleistet. Hierzu tragen vor allem die Anordnung der flächigen Reflexionselemente 3, 3a beziehungsweise 9, 10 sowie die Lichtführung mit einem blendfreien, indirekten und gerichteten Licht bei, das eine gut erkennbare Konturierung der Oberflächenfehler verursacht und damit die Wahrnehmung von Veränderungen verbessert. Nicht zuletzt wird auch den ergonomischen Anforderungen an die Arbeitsplatzgestaltung Rechnung getragen, indem der hohe Reflexionsgrad der flächigen Reflexionselemente 3, 3a beziehungsweise 9, 10 sowie die gerichtete Strahlung des Lichts ein geringeres Beleuchtungsniveau ermöglichen und keine Beeinträchtigung des Beobachters durch gegenüberliegende Lichtquellen stattfindet.

### Bezugszeichenliste

- 1: Bauteil
- 2: Traggerüst
- 3: vertikal verschwenkbares, flächiges Reflexionselement
- 3a: vertikal verschwenkbares, flächiges Reflexionselement
- 4: Leuchte
- 4a: Leuchte
- 4b: Leuchte
- 5: Lamelle
- 6: Umlenkreflektor
- 7: Öse
- 8: Querbalken
- 9: vertikal verschwenkbares, flächiges Reflexionselement
- 10: horizontal verschwenkbares, flächiges Reflexionselement
- 11: Beobachter
- 12: Modul
- 13: Modul
- 14: Modul
- α: Winkel
- β: Winkel
- B: Beobachtungsebene

## Patentansprüche

1. Vorrichtung zur visuellen Inspektion von Oberflächen von Körpern (1), insbesondere bei der Qualitätskontrolle oberflächenbehandelter Bauteile, unter Verwendung wenigstens einer Lichtquelle (4) und einem das von der Lichtquelle (4) emittierte Licht auf ein flächiges Reflexionselement (3, 3a, 9, 10) leitenden Umlenkreflektor (6), wobei das Licht durch das flächige Reflexionselement (3, 3a, 9, 10) definiert auf die Oberfläche eines zu inspizierenden Körpers (1) reflektierbar ist,
**dadurch gekennzeichnet,**
daß der zu inspizierende Körper (1) an einem Inspektionsort auf einer Inspektionsebene positionierbar ist, die im wesentlichen parallel zu einer Beobachtungsebene (B) eines die visuelle Inspektion vornehmenden Beobachters (11) angeordnet ist, und daß das Licht von wenigstens zwei flächigen Reflexionselementen (3, 3a, 9, 10) unter vorgegebenen Einfallwinkeln auf die Oberfläche zumindestens einer Seite des zu inspizierenden Körpers (1) zur Bildung einer Reflexionskontur reflektierbar ist, wobei der von den flächigen Reflexionselementen (3, 3a, 9, 10) reflektierte Strahlengang ausschließlich indirektes, gerichtetes Licht enthält, und wobei wenigstens eines der flächigen Reflexionselemente (3, 3a) oberhalb und wenigstens ein weiteres (9, 10) unterhalb der Beobachtungsebene (B) angeordnet und der jeweilige Strahlengang unter einem Winkel zur Beobachtungsebene (B) auf den zu inspizierenden Körper (1) gerichtet ist.

2. Vorrichtung nach Anspruch 1, dadurch gekennzeichnet, daß die flächigen Reflexionselemente (3, 3a, 9, 10) auf gegenüberliegenden Seiten des zu inspizierenden Körpers (1) angeordnet sind.

3. Vorrichtung nach Anspruch 1 oder 2, dadurch gekennzeichnet, daß die flächigen Reflexionselemente (3, 3a, 9, 10) von dem zu inspizierenden Körper (1) beabstandet neben diesem angeordnet sind.

4. Vorrichtung nach einem der Ansprüche 1 bis 3, dadurch gekennzeichnet, daß der zu inspizierende Körper (1) mittels einer Transporteinrichtung an dem Inspektionsort positionierbar ist.

5. Vorrichtung nach einem der Ansprüche 1 bis 4, dadurch gekennzeichnet, daß die flächigen Reflexionselemente relativ zu dem Strahlengang des von der Lichtquelle (4) emittierten Lichts verstellbar sind.

6. Vorrichtung nach Anspruch 5, dadurch gekennzeichnet, daß die flächigen Reflexionselemente einzelne Reflexionslamellen (5) aufweisen, die relativ zueinander verstellbar sind.

7. Vorrichtung nach einem der Ansprüche 1 bis 6, gekennzeichnet durch horizontal und/oder vertikal verschwenkbare Leuchten (4 bis 4b), in denen Lichtquelle, Umlenkreflektor (6) sowie Filter/Refraktorgläser integriert sind.

8. Vorrichtung nach Anspruch 7, dadurch gekennzeichnet, daß die Leuchten (4 bis 4b) dimmbar sind.

9. Vorrichtung nach Anspruch 7 oder 8, dadurch gekennzeichnet, daß die Leuchten (4 bis 4b) mit Lichtquellen versehen sind, die eine Lichtfarbe von ca. 5500 K aufweisen.

10. Vorrichtung nach einem der Ansprüche 7 bis 9, dadurch gekennzeichnet, daß die Leuchten (4 bis 4b) und die Reflexionselemente (3, 3a, 9, 10) modulartig gruppiert sind.

11. Vorrichtung nach Anspruch 10, gekennzeichnet durch ein erstes Modul (12), das zentral über dem zu inspizierenden Körper (1) angeordnete, vertikal verschwenkbare Leuchten (4) für oberhalb der Beobachtungsebene (B) befindliche, vertikal verschwenkbare, flächige Reflexionselemente (3, 3a) und/oder beidseitig neben dem zu inspizierenden Körper (1) angeordnete, vertikal verschwenkbare Leuchten (4a) für sich auf der jeweils gleichen Seite unterhalb der Beobachtungsebene (B) befindende, vertikal verschwenkbare, flächige Reflexionselemente (9) aufweist.

12. Vorrichtung nach Anspruch 10 oder 11, gekennzeichnet durch ein zweites Modul (13), das neben dem zu inspizierenden Körper (1) auf einer Seite desselben eine horizontal verschwenkbare Leuchte (4b) für ein auf der gleichen Seite unterhalb der Beobachtungsebene (B) angeordnetes, horizontal verschwenkbares, flächiges Reflexionselement (10) und auf der gegenüberliegenden Seite vertikal verschwenkbare Leuchten (4a) für unterhalb der Beobachtungsebene (B) angeordnete, vertikal verschwenkbare, flächige Reflexionselemente (9) aufweist.

13. Vorrichtung nach Anspruch 11 und 12, dadurch gekennzeichnet, daß mehrere Module (12, 13) des ersten und zweiten Typs hintereinander angeordnet sind.

14. Vorrichtung nach einem der vorhergehenden Ansprüche, gekennzeichnet durch eine Abschirmung gegenüber extern einfallendem Licht.
